Europäisches Patentamt

European Patent Office

Office européen des brevets

(19)

(11) **EP 1 055 905 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.[7]: **G01B 11/24**, G01B 11/30, G01B 15/08, B21B 38/02

(21) Anmeldenummer: **00107743.7**

(22) Anmeldetag: **11.04.2000**

(54) **Verfahren zur Bestimmung der Planheit eines Materialbandes**

Method to determine the flatness of a web of material

Procédé pour déterminer la planéité d'une bande de matériau

(84) Benannte Vertragsstaaten:
**AT BE CH DE DK ES FI FR GB GR IT LI LU NL PT SE**

(30) Priorität: **28.05.1999 DE 19924423**
**01.10.1999 DE 19947572**

(43) Veröffentlichungstag der Anmeldung:
**29.11.2000 Patentblatt 2000/48**

(73) Patentinhaber: **IMS-Messsysteme GmbH**
**42579 Heiligenhaus (DE)**

(72) Erfinder: **Flormann, Paul**
**42579 Heiligenhaus (DE)**

(74) Vertreter: **Rox, Thomas Dr.**
**COHAUSZ & FLORACK**
**Patent- und Rechtsanwälte**
**Bleichstrasse 14**
**40211 Düsseldorf (DE)**

(56) Entgegenhaltungen:
EP-A- 0 864 847          US-A- 3 766 386
US-A- 4 366 720          US-A- 4 541 723
US-A- 5 465 214

- **"THE CONTROL OF FLATNESS AND PROFILE INSTITUTE OF MATERIALS CONFERENCE" STEEL TIMES, FUEL & METALLURGICAL JOURNALS LTD. LONDON, GB, Bd. 224, Nr. 6, 1. Juni 1996 (1996-06-01), Seiten 212-213, XP000622346 ISSN: 0039-095X**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung der Planheit eines Materialbandes, eine Vorrichtung zur Durchführung des Verfahrens, sowie eine Verwendung einer Banddichenprofil-Meßvorrichtung zur Bestimmung der Planheit. Beim Kalt- und Warmwalzen von Metallblechen treten ungewünschte Unebenheiten des in Form eines Materialbandes erzeugten Metallbleches auf, die sich in der Laufrichtung bzw. Längsrichtung sowie quer dazu erstrecken. Diese Unebenheiten führen zu unterschiedlich starken Durchbiegungen des Materialbandes senkrecht zur Oberfläche, wodurch die Planheit gestört wird und für verschiedene Längsabschnitte des Materialbandes, die quer zur Längsrichtung angeordnet sind, unterschiedliche Bandlängungen auftreten. Es besteht daher die Notwendigkeit, beim Walzen eines Metallbleches die Planheit des erzeugten Materialbandes zu überwachen und bei Abweichungen von der Planheit die Bedingungen des Walzvorganges zu beeinflussen.

Der Wert der Bandlängung wird in Einheiten von I-Units gemessen, wobei eine I-Unit eine relative Längenänderung von $10^{-5}$ bedeutet, also bspw. 10 μm pro Meter.

Aus dem Stand der Technik sind verschiedene Verfahren zur Messung der Planheit bekannt.

Ein erstes Verfahren besteht in der Abtastung der Oberfläche des Materialbandes mit Hilfe eines gepulsten Laserstrahles, mit dem ein Raster von Entfernungspunkten von der Laserlichtquelle aufgenommen wird. Daraus wird auf die Durchbiegung des Materialbandes und somit auf die Planheit geschlossen.

Ein zweites Verfahren besteht darin, daß mit Hilfe einer optischen Abbildungsvorrichtung ein geometrisches Muster wie bspw. ein Streifenmuster auf die Oberfläche projiziert wird, das mit Hilfe einer Kamera überwacht wird. Durch Oberflächendurchbiegungen wird das Muster verzerrt, wobei die Größe der Verzerrung ein Maß für die Planheit darstellt.

Die beiden zuvor beschriebenen Verfahren arbeiten berührungslos, weshalb sie bevorzugt bei Warmwalzverfahren angewendet werden. Jedoch führen die Umweltbedingungen insbesondere beim Warmwalzen zu einer häufigen Wartung der optischen Komponenten. Außerdem ist in beiden Verfahren die Anordnung einer Meßvorrichtung erforderlich, die den üblicherweise verwendeten Vorrichtungen zur Messung von Banddickenprofilen hinzugefügt werden muß. Diese arbeiten in der Regel mit hochenergetischer elektromagnetischer Strahlung.

Ein drittes Verfahren verwendet eine Mehrzahl nebeneinander angeordneter und mit dem Materialband abrollender Druckmesser, die mit dem Materialband in Berührung stehen. Unterschiedliche Durchbiegungen führen zu unterschiedlichen Drücken, so daß die gemessenen Drücke als Maß der Planheit ausgewertet werden können. Der Nachteil dieses Verfahrens besteht in dem mechanischen Kontakt der einzelnen Druckmesser mit dem Materialband, so daß das Verfahren insbesondere bei Warmwalzverfahren wegen der hohen Temperaturen nicht angewendet werden kann. Aber auch beim Kaltwalzen weist das Verfahren den Nachteil auf, daß der mechanische Kontakt zu einem Verschleiß führt.

Aus der Patentschrift US 5465214 ist außerdem bekannt, die Planheit unit optischen Meßhöpfen (Triangulation) zu bestimmen, wobei die lokale Steigung des Bandes ermittelt wird.

Schließlich sind Verfahren und Vorrichtungen (Siehe z.B. in US 3766386) bekannt, die mit Hilfe von hochenergetischer elektromagnetischer Strahlung, wie bspw. Röntgen- oder Gammastrahlung, Banddickenquerprofile sowie die Bandkontur, also die Form und Lage des Materialbandes über der Breite, messen. Eine Bestimmung der Planheit des Materialbandes ist dagegen mit diesen Meßverfahren bisher nicht möglich gewesen.

Es wird hervorgehoben, daß außer bei Metallblechen auch bei anderen Materialien Unebenheiten in Materialbändern auftreten können, die ebenfalls mit Hilfe des nachfolgend beschriebenen Verfahrens gemessen werden können. Daher ist im folgenden stets allgemein von Materialband anstelle von Metallband die Rede.

Der Erfindung liegt das technische Problem zugrunde, ein Verfahren und eine Vorrichtung zur Bestimmung der Planheit eines Materialbandes anzugeben, bei denen die Bandlängung aus den Werten der Bandkontur berechnet werden.

Das zuvor aufgezeigte technische Problem wird durch ein Verfahren nach Anspruch 1 gelöst, bei dem zunächst mit Hilfe von mindestens zwei Strahlungsquellen und einer Mehrzahl von Detektoren an einer Mehrzahl von Meßpunkten Meßwerte aufgenommen werden. Dabei sind die Meßpunkte so angeordnet, daß sie quer zur Längsrichtung im Material des Bandes beabstandet zueinander liegen.

Die Meßpunkte werden einzeln von mindestens zwei Detektoren erfaßt, die jeweils Strahlung unter verschiedenen Raumwinkeln detektieren. Also ist jeweils ein Detektor auf eine der mindestens zwei Strahlungsquellen ausgerichtet und der andere Detektor auf die andere Strahlungsquelle. Das Band ist dabei zwischen den Strahlungsquellen und den Detektoren angeordnet. Als Meßpunkte sind daher diejenigen Volumenbereiche des Materialbandes zu verstehen, die von der von den Detektoren erfaßten Strahlung durchlaufen werden.

Weiterhin wird das Materialband relativ zu den Strahlungsquellen und den Detektoren in Längsrichtung bewegt. In vorgegebenen Abständen wird jeweils eine im wesentlichen alle Meßpunkte umfassende Meßwertreihe aufgenommen. Für jeden erfaßten Meßpunkt wird dann die Steigung des Materialbandes aus den Meßwerten von jeweiligen Paaren von Detektoren berechnet. Somit ergibt sich ein Gitter von Meßwerten und damit verbundenen Steigungswerten, das sich über einen vorgegebenen Bereich des Materialbandes erstreckt.

Für aufeinanderfolgende Meßwertreihen werden dann bei bekannter Relativgeschwindigkeit des Materialbandes zu den Strahlungsquellen und Detektoren in Längsrichtung die Wellenlänge und die Phase der Änderungen der Steigungen berechnet, wobei diese Änderungen die Planheit charakterisieren. Dabei ist unter Wellenlänge der Abstand von jeweils zwei aufeinanderfolgender Bereiche mit gleicher Durchbiegung nach oben oder nach unten zu verstehen.

Weiterhin wird aus der Wellenlänge und der Phase mindestens ein Extremum berechnet, für das gilt, daß der Betrag der Steigungskomponente in Längsrichtung minimal ist. Damit ist sichergestellt, daß die Steigungswerte im wesentlichen nur eine Querkomponente aufweisen, die die für die Bandlängung verantwortliche Durchbiegung des Materialbandes in Querrichtung charakterisieren.

Zu jedem Extremum wird eine Extremmeßwertreihe berechnet, die jeweils die zum Extremum nächstliegende Meßwertreihe darstellt, da die Meßwertreihen nicht kontinuierlich, sondern diskret über das Materialband verteilt angeordnet sind. Somit erhält man eine möglichst genaue Annäherung an das Extremum und die Extremmeßwertreihe enthält die für die Bestimmung der Querkontur erforderlichen Informationen. Die Querkontur wird durch Aufsummieren der Steigungswerte der Extremmeßwertreihe berechnet und aus der Querkontur wird die Amplitude der Unebenheiten im Extremum für jeden Meßpunkt bestimmt. Aus der Wellenlänge und der Amplitude der Querkontur wird schließlich die Bandlängung berechnet, wobei für jeden Längsabschnitt des Materialbandes, das in Längsrichtung aufeinanderfolgende korrespondierende Meßpunkte enthält, eine Bandlängung berechnet werden kann.

Erfindungsgemäß ist demnach erkannt worden, daß aufgrund der veränderlichen Absorptionen der Strahlung quer und längs zum Materialband die Unebenheiten im Materialband ermittelt werden können. Weiterhin werden in vorteilhafter Weise die in den jeweiligen Steigungswerten enthaltenen Komponenten in Längsrichtung und quer dazu getrennt voneinander ausgewertet.

In bevorzugter Weise wird von den Detektoren die durch das Materialband abgeschwächte Intensität der Strahlung gemessen. Dabei ist der Grad der Abschwächung ein Maß für die von der Strahlung durchdrungene Dicke des Materialbandes. Weiter ist bevorzugt, daß die Meßpunkte im wesentlichen die gesamte Breite des Materialbandes abdecken. Dadurch wird eine Untersuchung der gesamten Breite des Materialbandes mit einer Meßwertreihe ermöglicht. Eine lineare Hin- und Herbewegung der Strahlungsquellen und der Detektoren quer zur Längsrichtung ist dann nicht erforderlich, jedoch ist die Anzahl der Detektoren relativ groß.

Die Genauigkeit des Verfahrens kann darüber hinaus gesteigert werden, indem die Detektoren während der Längsbewegung des Materialbandes zusätzlich quer zum Materialband mit einer Amplitude im Bereich des Abstandes zweier Detektoren hin- und herbewegt werden. Dadurch können auch die Bereiche zwischen jeweils zwei Detektoren erfaßt werden, wodurch sonst nicht erfaßte Bereiche des Materialbandes analysiert werden können.

Weiterhin können die Meßpunkte in Meßkanäle von jeweils mindestens zwei Meßpunkten zusammengefaßt werden. In bevorzugter Weise umfassen die Meßkanäle jeweils im wesentlichen dieselbe Anzahl von Meßpunkten und für jeden Meßkanal werden die Werte der Steigungen ermittelt. Weiter wird vorzugsweise für jeden Meßkanal separat die Bandlängung berechnet. Dadurch wird die Information von benachbarten Meßpunkten zusammengefaßt, so daß ein verbessertes Signal-zu-Rauschen Verhältnis erzielt wird. Es ist auch möglich, sämtliche Meßpunkte zu einem Meßkanal oder jeweils eine Hälfte der Meßpunkte zu zwei Meßkanälen zusammenzufassen. Die Größe der Meßkanäle kann in Abhängigkeit von der Qualität der Meßwerte eingestellt werden.

In weiter bevorzugter Weise werden die Wellenlänge und die Phase der Unebenheiten mit Hilfe einer Fouriertransformation berechnet. Es können jedoch auch andere mathematische Methoden angewendet werden, mit denen Wellenlänge und Phase der Unebenheiten berechnet werden können.

Wie oben ausgeführt worden ist, wird für jedes Extremum eine Extremmeßwertreihe bestimmt. In bevorzugter Weise wird die Bandkontur im Bereich des Extremums aus den Daten der Extremmeßwertreihe und mindestens einer weiteren benachbart angeordneten Meßwertreihe mittels arithmetischer Mittelung berechnet. Dadurch wird ebenfalls das Signal-zu-Rauschen Verhältnis verbessert. Insbesondere werden die beiden Meßwertreihen für die Auswertung verwendet, zwischen denen das berechnete Extremum liegt.

Weiterhin wird vorzugsweise die Berechnung der Bandlängung mit Hilfe der Formel

$$\left(\frac{Amplitude \cdot \pi}{Wellenlänge}\right)^2 \cdot 10^5$$

wobei Amplitude und Wellenlänge in der Einheit Meter eingesetzt werden, in Einheiten I-Unit durchgeführt. Dabei wird vorausgesetzt, daß die Unebenheiten des Materialbandes sinusförmig sind. Ebenso kann vereinfacht auch eine Dreiecksform als Näherung herangezogen werden, so daß die Bandlängung in einfacher Weise geometrisch bestimmt werden kann.

Für den Ablauf des Verfahrens wird eine Mehrzahl von Meßwertreihen benötigt, um die Wellenlänge und die Phase der Unebenheiten zu bestimmen. Daher ist es bevorzugt, daß zu Beginn der Messung Meßwer-

treiben für eine vorgegebene erste Bandlänge aufgenommen werden, bevor diese ein erstes Mal ausgewertet werden. Danach, also nach der ersten vorgegebenen Bandlänge, werden die Meßwerte für eine kleinere zweite vorgegebene Bandlänge aufgenommen, bevor jeweils die zuletzt über eine ganze erste Bandlänge aufgenommenen Meßwerte ausgewertet werden. Mit anderen Worten werden immer Meßwertreihen, die über einen der ersten Bandlänge entsprechenden Abschnitt gesammelt worden sind, zur Bestimmung der Bandlänge ausgewertet.

Beispielsweise werden zunächst über 10 Meter Bandlänge Meßwerte in Abständen von jeweils 10 cm aufgenommen. Somit erhält man erste Auswerteergebnisse nach den ersten 10 Metern. Danach werden weitere 2 Meter Bandlänge vermessen und die dann zuletzt gemessenen 10 Meter werden ausgewertet. Dadurch wird eine gleitende Mittelwertbildung innerhalb der Auswerteergebnisse erreicht.

Das oben genannte technische Problem wird auch erfindungsgemäß durch eine Vorrichtung mit den Merkmalen des Anspruches 13 gelöst, deren weitere Merkmale in den abhängigen Ansprüchen enthalten sind. Diese werden anhand der nachfolgenden Beschreibung eines Ausführungsbeispieles näher erläutert.

Das technische Problem wird auch durch die Verwendung einer Vorrichtung zur Messung des Banddickenprofils eines Materialbandes zur Bestimmung der Planheit gelöst (s. Anspruch 20). Diese Vorrichtung weist mindestens zwei Strahlungsquellen, eine Mehrzahl von Detektoren und Mittel zur Auswertung der von den Detektoren aufgenommenen Meßwerten auf. Die Detektoren sind beabstandet zueinander und zu den Strahlungsquellen angeordnet, wobei das Materialband zwischen den Strahlungsquellen und den Detektoren angeordnet ist und relativ dazu in Längsrichtung bewegt wird. Die Detektoren erzeugen Meßwerte zu im Materialband angeordneten Meßpunkten und die Auswertemittel berechnen aus den Meßwerten die Steigungen in den Meßpunkten und daraus die Bandplanheit.

Somit ist es erstmals möglich, eine bisher lediglich für die Messung des Banddickenprofils vorhandene Vorrichtung auch für die Messung und Überprüfung der Planheit des Materialbandes zu verwenden. Daher wird der technische Aufwand insgesamt erheblich reduziert, da keine der zur Durchführung der oben genannten, aus dem Stand der Technik bekannten Verfahren erforderlichen separaten Vorrichtungen notwendig ist. Da die Bestimmung der Planheit mit einer bereits vorhandenen Vorrichtung zur Messung des Banddickenprofils eines Materialbandes durchgeführt werden kann, ist die vorliegende Erfindung auch für eine Nachrüstung vorhandener Vorrichtungen einsetzbar. Denn das erfindungsgemäße Verfahren stellt im wesentlichen eine detaillierte Analyse der bisher gemessenen Meßwerte dar.

Im folgenden wird ein Ausführungsbeispiel der vorliegenden Erfindung in Bezug auf die Zeichnung näher erläutert. In der Zeichnung zeigen

Fig. 1      eine Vorrichtung zur Durchführung des erfindungsgemäßen Verfahrens in einer schematischen Seitenansicht in Längsrichtung,

Fig. 2      die Vorrichtung nach Fig. 1 in einer schematischen Seitenansicht quer zur Längsrichtung,

Fig. 3a,b      den Strahlengang durch das Materialband in einer Ausschnittsvergrößerung aus Fig. 1 für verschiedene Steigungen des Materialbandes,

Fig. 4      eine zweidimensionale graphische Darstellung der Planheit eines Materialbandes,

Fig. 5a      eine graphische Darstellung des Verlaufes der Steigungen quer zur Längsrichtung und

Fig. 5b      eine graphische Darstellung der durch Aufsummieren der Steigungen berechneten Kontur.

Fig. 6      eine dreidimensionale Darstellung der Planheit eines Materialbandes, wobei die Amplituden der Extrema zur Verdeutlichung stark überhöht dargestellt sind.

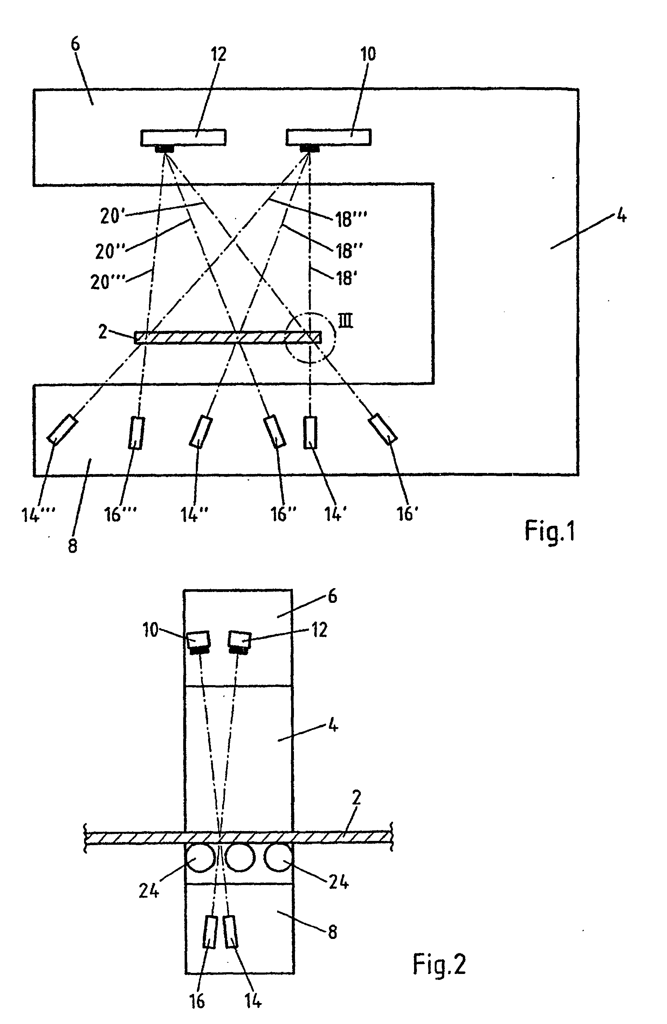

In den Fig. 1 und 2 ist eine erfindungsgemäße Vorrichtung für die Bestimmung der Planheit eines Materialbandes 2 dargestellt. Die Vorrichtung umfaßt ein Gehäuse 4, das C-förmig ausgebildet ist und einen oberen Schenkel 6 und einen unteren Schenkel 8 aufweist. Im oberen Schenkel 6 sind zwei Strahlungsquellen 10 und 12 angeordnet, die quer zur Längsrichtung des Materialbandes beabstandet zueinander angeordnet sind. Die Längsrichtung verläuft in Fig. 1 senkrecht zur Zeichenebene und in Fig. 2 horizontal.

Die Strahlungsquellen 10 und 12 sind vorliegend als Röntgenquellen ausgebildet und strahlen Röntgenstrahlung unter einem vorgegebenen Winkel in Richtung des unteren Schenkels 8 aus. Es kann jedoch auch andere hochenergetische elektromagnetische Strahlung ausgesendet werden, insbesondere Gammastrahlung.

Eine Mehrzahl von Detektoren 14 und 16 ist im unteren Schenkel 8 quer zur Längsrichtung beabstandet zueinander und beabstandet zu den Strahlungsquellen 10 und 12 angeordnet. Jeweils zwei Detektoren 14'-16', 14''-16'', ... sind dabei auf die beiden unterschiedliche Strahlungsquellen 10 und 12 ausgerichtet sind und bilden jeweils ein Paar von Detektoren.

Bei einem weiteren, nicht in der Zeichnung dargestellten Ausführungsbeispiel werden drei Detektoren für die Meßwertaufnahme zu einem Meßpunkt verwendet. Damit wird eine höhere Redundanz in der Bestimmung der Steigung erreicht.

Die Detektoren 14 und 16 sind vorliegend Ionisationskammern, sie können jedoch beispielsweise auch in Form von Szintillationszählern, Zählrohren oder Halbleiterdetektoren ausgebildet sein. Sie messen die Intensität der durch das Materialband hindurchtretenden Strahlung, die ein Maß für die Länge des Durchtrittsweges der Strahlung durch das Materialband hindurch darstellt.

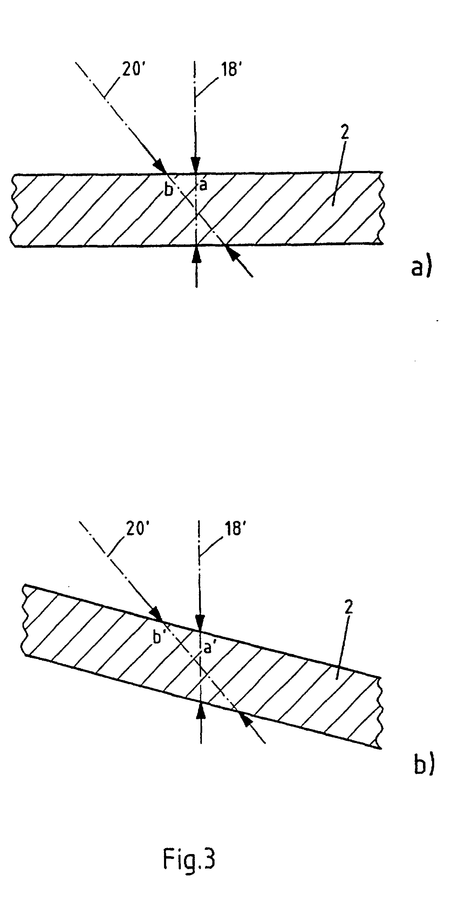

Das Materialband 2 ist zwischen dem oberen Schenkel 6 mit den Strahlungsquellen 10 und 12 und dem unteren Schenkel 8 mit den Detektoren 14 und 16 angeordnet. Dabei überschneiden sich die Achsen 18', 18", ... und 20', 20", ..., die jeweils von den Detektoren 14', 14", ... und 16', 16", ... eines Paares und den Strahlungsquellen 10 und 12 gebildet werden, im wesentlichen im Bereich des Materialbandes 2 und definieren somit den Meßpunkt 22 jedes Paares von Detektoren 14'-16', 14"-16", .... Die beiden Detektoren eines Paares von Detektoren 14'-16', 14"-16", ... erfassen somit jeweils unterschiedliche Raumwinkel. Dieses ist in Fig. 3 in einer Vergrößerung dargestellt.

Wie in Fig. 2 dargestellt ist, sind im Bereich des Gehäuses 4 Rollen 24 vorgesehen, die das durchlaufende Materialband unterstützen.

Weiterhin weist die Vorrichtung nicht in der Zeichnung dargestellte Mittel zur Auswertung der von den Detektoren 14 und 16 aufgenommenen Meßwerte auf, wobei die Auswertemittel, die vorzugsweise mindestens einen Rechner aufweisen, aus den Meßwerten die Steigung des Materialbandes 2 in den Meßpunkten 22 und daraus die Planheit des Materialbandes 2 berechnen, wie weiter unten beschrieben wird.

Bei der in den Fig. 1 und 2 dargestellten Vorrichtung sind die Detektoren 14 und 16 über im wesentlichen die gesamte Breite des Materialbandes 2 verteilt angeordnet. Somit wird bei der Auswertung der Meßwerte aller Detektoren die gesamte Breite des Materialbandes 2 erfaßt.

Die Genauigkeit des Verfahrens kann jedoch gesteigert werden, indem die Detektoren 14 und 16 während der Längsbewegung des Materialbandes zusätzlich quer zum Materialband 2 hin- und herbewegt werden, wozu nicht in der Zeichnung dargestellte Antriebsmittel vorgesehen sind. Die Amplitude der Hin- und Herbewegung liegt im Bereich des Abstandes zweier Detektoren 12 und 14 quer zur Längsrichtung des Materialbandes 2. Dadurch können auch sonst nicht erfaßte Bereiche zwischen jeweils zwei Detektoren 12 und 14 erfaßt werden.

Bei einer anderen, nicht in der Zeichnung dargestellten Ausführungsform decken die Detektoren 14 und 16 nur teilweise die Breite des Materialbandes 2 ab. Dabei sind Antriebsmittel zum Verstellen der Strahlungsquellen 10 und 12 und der Detektoren 14 und 16, also des Gehäuses 4, vorgesehen, wobei die Antriebsmittel während einer Meßreihe ein Verstellen im wesentlichen quer zur Längsrichtung bewirken. Somit wird mit einer geringeren Anzahl von Detektoren 14 und 16 die gesamte Breite des Materialbandes erfaßt, wobei jedoch zusätzlich der Aufwand der Querverstellung aufgewendet werden muß.

Die Mittel zur Auswertung der von den Detektoren 14 und 16 aufgenommenen Meßwerte sind als eine Mehrzahl von Rechnern ausgebildet, wobei jeweils ein Rechner oder eine Gruppe von Rechnern die jeweiligen Auswertegrößen wie Banddicke, Bandbreite, Bandkontur und Planheit berechnen. Eine parallele Auswertung mit hoher Geschwindigkeit wird dadurch erzielt.

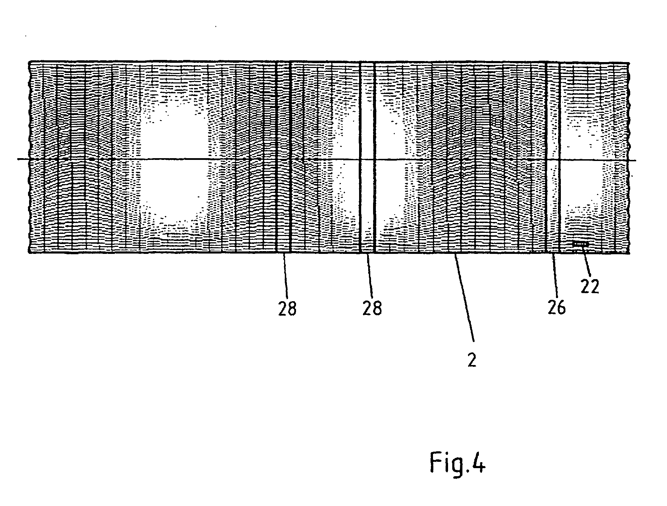

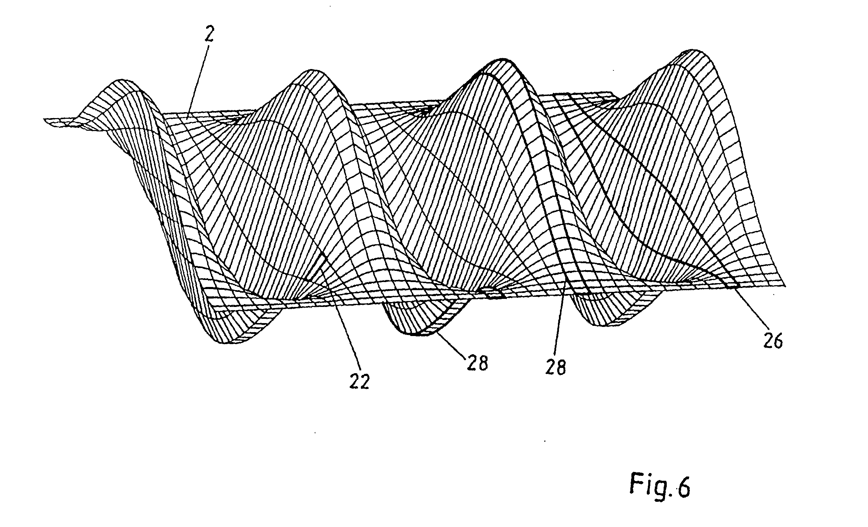

Das erfindungsgemäße Verfahren wird nun in folgender Weise mit Hilfe der zuvor beschrieben Vorrichtung durchgeführt. An einer Mehrzahl von Meßpunkten 22 werden Meßwerte aufgenommen, wobei die Meßpunkte 22 quer zur Längsrichtung im Material des Materialbandes 2 beabstandet zueinander angeordnet sind. Das Materialband 2 wird relativ zu den Strahlungsquellen 10 und 12 und den Detektoren 14 und 16 in Längsrichtung bewegt und in vorgegebenen Abständen wird jeweils eine im wesentlichen alle Meßpunkte 22 umfassende Meßwertreihe 26 aufgenommen. Korrespondierende Meßpunkte 22 benachbarter Meßwertreihen 26 bilden dabei in Längsrichtung auf Planheit zu untersuchende Längsabschnitte des Materialbandes. Dadurch ergibt sich ein Raster an Meßpunkten 22, das sich über das Materialband 2 erstreckt, wie in den Fig. 4 und 6 dargestellt ist.

Für jeden erfaßten Meßpunkt 22 wird die Steigung des Materialbandes 2 aus den Meßwerten der Paare von Detektoren 14'-16', 14"-16", ... berechnet. Wie in den Fig. 3a und 3b dargestellt ist, werden bei gleichen Raumwinkeln, die durch die Achsen 18' und 20' dargestellt sind, und bei unterschiedlichen Steigungen des Materialbandes 2 relativ zu diesen Raumwinkeln unterschiedliche Durchtrittslängen der Strahlung durch das Materialband 2 hervorgerufen.

Diese Durchtrittslängen sind als a,b bzw. a',b' mit den Pfeilen gekennzeichnet und führen zu unterschiedlichen Absorptionen innerhalb des Materialbandes 2, die sich in unterschiedlichen Meßwerten der Detektoren 14' und 16' ausdrücken. Aus den bekannten Raumwinkeln der Achsen 18' und 20' läßt sich dann einerseits die Dicke und andererseits die Steigung des Materialbandes 2 wie folgt berechnen.

Die beiden Detektoren 14 und 16 vermessen das Materialband 2 unter bekannten, voneinander abweichenden Raumwinkeln. Aus den von den Detektoren 14 und 16 aufgenommenen Meßwerten wird dann der Lagewinkel des Materialbandes, beispielsweise bezogen auf die Horizontale, mit Hilfe bekannter geometrischer Additionstheoreme berechnet. Aus dem Lagewinkel läßt sich die Steigung ableiten.

Für aufeinanderfolgende Meßwertreihen werden bei bekannter Relativgeschwindigkeit des Materialbandes 2 in Längsrichtung die Wellenlänge und die Phase der Änderungen der Steigungen mit Hilfe einer Fouriertransformation berechnet, wobei diese Änderungen die Planheit des Materialbandes 2 charakterisieren. Dieses ist schematisch in den Fig. 4 und 6 dargestellt, in denen ein Ausschnitt aus dem Materialband 2 dargestellt ist. Die Längsrichtung erstreckt sich in Fig. 4 senkrecht und die einzelnen Meßwertreihen 26 sind als horizontale Bereiche dargestellt. Diese Bereiche weisen einzelne unter bestimmten Winkeln ausgerichtete Linien auf, die die Steigungen der jeweiligen Meßpunkte 22 darstellen. Daraus ergibt sich ein charakteristisches Muster mit hellen und dunklen Bereichen, die erhabene und abgesenkte Abschnitte des Materialbandes 2 darstellen. Der Abstand jeweils zweier heller oder dunkler Bereiche in Fig. 4 ist ein Maß für die Wellenlänge der Unebenheiten.

In Fig. 6 dagegen erstreckt sich die Längsrichtung von links nach rechts und die unterschiedlichen Steigungen in den einzelnen Meßpunkten 22 sind in der dreidimensionalen Darstellung deutlich zu erkennen, ebenso wie die Extrema mit den zugeordneten Extremmeßwertreihen 28. Es wird hervorgerufen, daß die Darstellung insoweit stark schematisch ist, daß die Abfolge der Extrema in Form eines regelmäßigen Sinus dargestellt ist. Bei Materialbändern dagegen treten die durch eine Bandlängung hervorgerufenen Extrema unregelmäßig auf. Die Betrachtung als Sinuswelle ist daher eine stark vereinfachte Näherung.

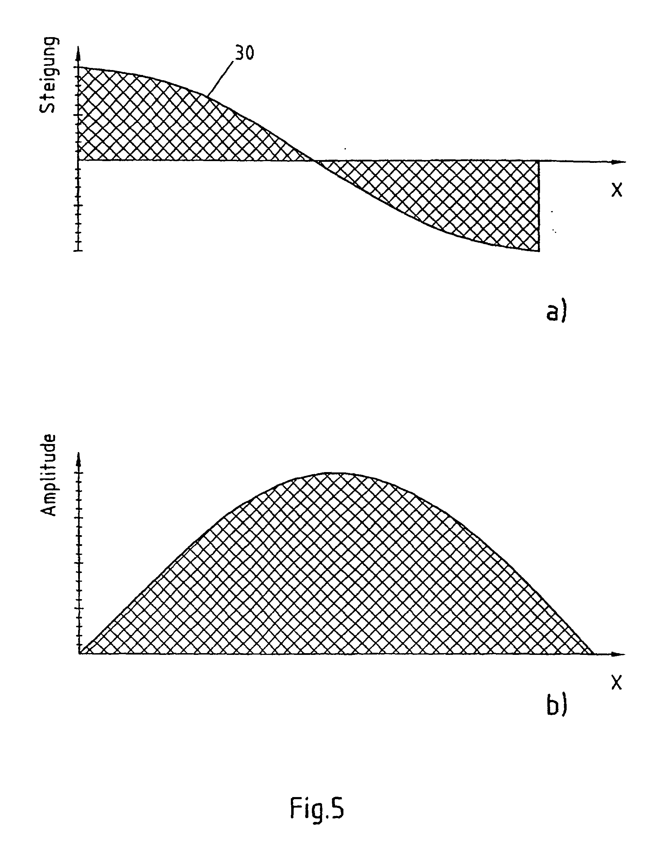

Aus der Wellenlänge und der Phase werden mindestens ein Extremum und die jeweils dazugehörige nächstliegende Extremmeßwertreihe 28 berechnet. Die Extremmeßwertreihe 28 zeichnet sich dann dadurch aus, daß die Steigungswerte im wesentlichen nur eine Querkomponente aufweisen und somit direkt zur Berechnung der Querkontur herangezogen werden können. Somit hat im wesentlichen eine Trennung von Längs- und Querkomponenten stattgefunden. Eine Folge von Steigungswerten quer zur Längsrichtung ist in Fig. 5a als Einhüllende 30 der Fläche dargestellt.

Aus der Querkontur wird dann die Amplitude der Unebenheit für jeden Meßpunkt 22 bestimmt. Schließlich ergibt sich aus der Wellenlänge und der Amplitude die Bandlängung für jeden Längsabschnitt des Materialbandes.

Zur Erhöhung der Auswertegenauigkeit kann jeweils eine Mehrzahl von Meßpunkten zu Meßkanälen zusammengefaßt werden, für die dann jeweils eine Bandlängung in der zuvor beschriebenen Weise berechnet wird.

**Patentansprüche**

1. Verfahren zur Bestimmung der Planheit eines Materialbandes, wobei das Materialband eine Längsrichtung vorgibt und zwischen mindestens zwei Strahlungsquellen und einer Mehrzahl von Detektoren angeordnet ist,

   - bei dem mit Hilfe der mindestens zwei Strahlungsquellen und der Mehrzahl von Detektoren an einer Mehrzahl von Meßpunkten Meßwerte aufgenommen werden, wobei die Meßpunkte quer zur Längsrichtung im Material des Bandes beabstandet zueinander angeordnet sind und von mindestens zwei Detektoren erfaßt werden, die jeweils Strahlung unter verschiedenen Raumwinkeln detektieren,

   - bei dem das Materialband relativ zu den Strahlungsquellen und den Detektoren in Längsrichtung bewegt wird und in vorgegebenen Abständen jeweils eine im wesentlichen alle Meßpunkte umfassende Meßwertreihe aufgenommen wird,

   - bei dem für jeden erfaßten Meßpunkt die Steigung des Materialbandes aus den Meßwerten von jeweiligen paaren von Detektoren berechnet wird,

   - bei dem für aufeinanderfolgende Meßwertreihen bei bekannter Relativgeschwindigkeit in Längsrichtung die Wellenlänge und die Phase der Änderungen der Steigungen berechnet werden,

   - bei dem aus der Wellenlänge und der Phase mindestens ein Extremum und die jeweils dazugehörige nächstliegende Extremmeßwertreihe berechnet werden,

   - bei dem die Querkontur durch Aufsummieren der Steigungswerte der Extremmeßwertreihe berechnet wird, wobei die Amplitude der Querkontur bestimmt wird, und

   - bei dem aus der Wellenlänge und der Amplitude der Kontur die Bandlängung berechnet wird.

2. Verfahren nach Anspruch 1, bei dem die Detektoren die durch das Materialband abgeschwächte Intensität der Strahlung messen.

3. Verfahren nach Anspruch 1 oder 2, bei dem die Meßpunkte im wesentlichen die gesamte Breite des Materialbandes abdecken.

4. Verfahren nach einem der Ansprüche 1 bis 3, bei dem die Meßpunkte in Meßkanäle von jeweils mindestens zwei Meßpunkten zusammengefaßt werden.

5. Verfahren nach Anspruch 4, bei dem die Meßkanäle jeweils im wesentlichen dieselbe Anzahl von Meßpunkten umfassen.

6. Verfahren nach Anspruch 4 oder 5, bei dem für jeden Meßkanal die Werte der Steigungen ermittelt werden.

7. Verfahren nach einem der Ansprüche 4 bis 6, bei dem für jeden Meßkanal eine Bandlängung berechnet wird.

8. Verfahren nach einem der Ansprüche 1 bis 7, bei dem mit Hilfe einer Fouriertransformation die Wellenlänge und die Phase der Planheit berechnet wird.

9. Verfahren nach einem der Ansprüche 1 bis 8, bei dem die Kontur des Materialbandes im Bereich des Extremums aus den Daten der Extrememeßwertreihe und mindestens einer weiteren Meßwertreihe berechnet wird.

10. Verfahren nach einem der Ansprüche 1 bis 9, bei dem die Berechnung der Bandlängung mit Hilfe der Formel

$$\left(\frac{Amplitude \cdot \pi}{Wellenlänge}\right)^2 \cdot 10^5$$

in Einheiten I-Unit durchgeführt wird.

11. Verfahren nach einem der Ansprüche 1 bis 10, bei dem zu Beginn für eine erste vorgegebene Bandlänge Meßwerte aufgenommen werden, bevor diese ausgewertet werden.

12. Verfahren nach Anspruch 11, bei dem nach der ersten vorgegebenen Bandlänge die Meßwerte für eine kleinere zweite vorgegebene Bandlänge aufgenommen werden, bevor jeweils die zuletzt über eine ganze erste Bandlänge aufgenommenen Meßwerte ausgewertet werden.

13. Vorrichtung zur Bestimmung der Planheit eines Materialbandes, wobei das Materialband (2) eine Längsrichtung vorgibt,

- mit mindestens zwei Strahlungsquellen (10, 12), die quer zur Längsrichtung beabstandet zueinander angeordnet sind,
- mit einer Mehrzahl von Detektoren (14, 16), die quer zur Längsrichtung beabstandet zueinander und beabstandet zu den Strahlungsquellen (10, 12) angeordnet sind, wobei die Vorrichtung so eingerichtet ist, daß im Gebrauch das Materialband (2) zwischen den Strahlungsquellen (10, 12) und den Detektoren (14, 16) angeordnet ist, und
- mit Mitteln zur Auswertung der von den Detektoren (14, 16) aufgenommenen Meßwerte,
- wobei jeweils mindestens zwei Detektoren (14, 16) auf zwei unterschiedliche Strahlungsquellen (10, 12) ausgerichtet sind und ein Paar von Detektoren bilden und
- wobei sich die jeweils von den Detektoren (14, 16) eines Paares und den Strahlungsquellen (10, 12) gebildeten Achsen im wesentlichen im Bereich des Materialbandes überschneiden und somit einen Meßpunkt (22) vorgeben,

**dadurch gekennzeichnet,**

- **daß** die Auswertemittel so eingerichtet sind, daß sie im Gebrauch aus den Meßwerten die Steigung des Materialbandes in den Meßpunkten (22) und daraus die Planheit des Materialbandes berechnen.

14. Vorrichtung nach Anspruch 13, **dadurch gekennzeichnet, daß** die Strahlungsquellen (10, 12) hochenergetische elektromagnetische Strahlung aussenden, insbesondere Röntgenstrahlung oder Gammastrahlung.

15. Vorrichtung nach Anspruch 13 oder 14, **dadurch gekennzeichnet, daß** die Detektoren (14, 16) als Ionisationskammern, Szintillationszähler, Zählrohr oder Halbleiterdetektor ausgebildet sind.

16. Vorrichtung nach einem der Ansprüche 13 bis 15, **dadurch gekennzeichnet, daß** sich die Detektoren (14, 16) über im wesentlichen die gesamte Breite des Materialbandes (2) verteilt angeordnet sind.

17. Vorrichtung nach einem der Ansprüche 13 bis 15, **dadurch gekennzeichnet, daß** Verstellmittel zum Verstellen der Detektoren (12, 14) quer zur Längsrichtung des Materialbandes (2) vorgesehen sind.

18. Vorrichtung nach einem der Ansprüche 13 bis 15, **dadurch gekennzeichnet, daß** die Detektoren (14, 16) teilweise die Breite des Materialbandes (2) abdecken und daß Antriebsmittel zum Verstellen der Strahlungsquellen (10, 12) und der Detektoren (14, 16) vorgesehen sind, wobei die Antriebsmittel während einer Meßreihe ein Verstellen im wesentlichen quer zur Längsrichtung bewirken.

19. Vorrichtung nach einem der Ansprüche 13 bis 18, **dadurch gekennzeichnet, daß** die Auswertemittel als Mehrzahl von Rechnern ausgebildet sind, wobei jeweils ein Rechner oder eine Gruppe von Rechnern die jeweiligen Auswertegrößen zumindest teilweise parallel berechnen.

20. Verwendung einer Vorrichtung zur Messung des Banddickenprofils eines Materialbandes zur Bestimmung der Planheit,

- wobei die Vorrichtung

  - mindestens zwei Strahlungsquellen,
  - eine Mehrzahl von Detektoren, die beabstandet zueinander und zu den Strahlungsquellen angeordnet sind, wobei das Materialband zwischen den Strahlungsquellen und den Detektoren angeordnet ist und relativ dazu in Längsrichtung bewegt wird, und

- Mittel zur Auswertung der von den Detektoren aufgenommenen Meßwerten aufweist,

- wobei die Detektoren Meßwerte zu im Materialband angeordneten Meßpunkten erzeugen und
- wobei die Auswertemittel aus den Meßwerten die Steigungen in den Meßpunkten und daraus die Planheit des Materialbandes berechnen.

**Claims**

1. A method for determining the flatness of a material strip, wherein the material strip predefines a longitudinal direction and is arranged between at least two radiation sources and a plurality of detectors,

   - wherein with the aid of the at least two radiation sources and the plurality of detectors measured values are recorded at a plurality of measuring points, wherein the measuring points are arranged at a distance from one another transverse to the longitudinal direction in the material of the strip and are recorded by at least two detectors which respectively detect radiation at different solid angles,
   - wherein the material strip is moved in the longitudinal direction relative to the radiation sources and the detectors, and a series of measured values substantially comprising all the measuring points is recorded at predetermined distances,
   - wherein for each measuring point recorded, the slope of the material strip is calculated from the measured values of respective pairs of detectors,
   - wherein for successive series of measured values for a known relative speed in the longitudinal direction, the wavelength and the phase of the changes in the slopes are calculated,
   - wherein at least one extremum and the respectively appropriate closest series of extreme measured values are calculated from the wavelength and the phase,
   - wherein the transverse contour is calculated by summing the slopes of the series of extreme measured values, wherein the amplitude of the transverse contour is determined and
   - wherein the strip elongation is calculated from the wavelength and the amplitude of the contour.

2. The method according to claim 1, wherein the detectors measure the intensity of the radiation attenuated by the material strip.

3. The method according to claim 1 or claim 2, wherein the measured points substantially cover the entire width of the material strip.

4. The method according to any one of claims 1 to 3, wherein the measuring points are combined in measuring channels of respectively at least two measuring points.

5. The method according to claim 4, wherein the measuring channels respectively comprise substantially the same number of measuring points.

6. The method according to claim 4 or claim 5, wherein the values of the slopes are determined for each measuring channel.

7. The method according to any one of claims 4 to 6, wherein a strip elongation is calculated for each measuring channel.

8. The method according to any one of claims 1 to 7, wherein the wavelength and the phase of the flatness are calculated using a Fourier transformation.

9. The method according to any one of claims 1 to 8, wherein the contour of the material strip in the region of the extremum is calculated from the data of the series of extreme measured values and at least one other series of measured values.

10. The method according to any one of claims 1 to 9, wherein the strip elongation is calculated in units of the I-unit using the formula

$$\left( \frac{Amplitude \cdot \pi}{Wellenlänge} \right)^2 \cdot 10^5$$

11. The method according to any one of claims 1 to 10, wherein initially for a first predetermined strip length, measured values are recorded before these are evaluated.

12. The method according to claim 11, wherein after the first predetermined strip length the measured values for a shorter second predetermined strip length are recorded before respectively the last measured values recorded over an entire first strip length are evaluated.

13. An apparatus for determining the flatness of a material strip, wherein the material strip (2) predetermines a longitudinal direction,

   - comprising at least two radiation sources (10, 12) arranged at a distance from one another transverse to the longitudinal direction,

- comprising a plurality of detectors (14, 16) arranged transverse to the longitudinal direction at a distance from one another and at a distance from the radiation sources (10, 12), wherein the apparatus is installed such that during use the material strip (2) is arranged between the radiation sources (10, 12) and the detectors (14, 16),
- comprising means for evaluating the measured values recorded by the detectors (14, 16),
- wherein respectively at least two detectors (14, 16) are aligned to two different radiation sources (10, 12) and form a pair of detectors and
- wherein the axes respectively formed by one pair of the detectors (14, 16) and the radiation sources (10, 12) intersect in the area of the material strip and thus predetermine a measuring point (22),

**characterised in**

- **that** the evaluating means are installed such that during use they calculate the slope of the material strip from the measured values at the measuring points (22) and from this the flatness of the material strip.

14. The apparatus according to claim 13, **characterised in that** the radiation sources (10, 12) emit high-energy electromagnetic radiation, especially x-rays or gamma rays.

15. The apparatus according to claim 13 or claim 14, **characterised in that** the detectors (14, 16) are constructed as ionisation chambers, scintillation counters, counting tubes or semiconductor detectors.

16. The apparatus according to any one of claims 13 to 15, **characterised in that** the detectors (14, 16) are distributed over substantially the entire width of the material strip (2).

17. The apparatus according to any one of claims 13 to 15, **characterised in that** adjusting means are provided to adjust the detectors (12, 14) transverse to the longitudinal direction of the material strip (2).

18. The apparatus according to any one of claims 13 to 15, **characterised in that** the detectors (14, 16) partially cover the width of the material strip (2) and that drive means are provided for adjusting the radiation sources (10, 12) and the detectors (14, 16), wherein the drive means bring about an adjustment substantially transverse to the longitudinal direction during a series of measurements.

19. The apparatus according to any one of claims 13 to 18, **characterised in that** the evaluating means are constructed as a plurality of computers, wherein respectively one computer or a group of computers calculates the respective evaluation quantities at least partly in parallel.

20. Use of an apparatus for measuring the strip thickness profile of a material strip to determine the flatness,

- wherein the apparatus has

  - at least two radiation sources,
  - a plurality of detectors arranged at a distance from one another and from the radiation sources, wherein the material strip is arranged between the radiation sources and the detectors and is moved relative thereto in the longitudinal direction, and
  - means for evaluating the measured values recorded by the detectors,

- wherein the detectors produce measured values at measuring points arranged in the material strip and
- wherein the evaluating means calculate the slope at the measuring points from the measured values and from this the flatness of the material strip.

**Revendications**

1. Procédé de définition de la planéité d'une bande de matériau, la bande de matériau définissant un sens longitudinal et étant disposée entre au moins deux sources de rayonnement et une pluralité de détecteurs,

- dans lequel, à l'aide des au moins deux sources de rayonnement et de la pluralité de détecteurs, des valeurs mesurées sont relevées à une pluralité de points de mesure, les points de mesure étant disposés à distance les uns des autres transversalement au sens longitudinal dans le matériau de la bande et étant enregistrés par au moins deux détecteurs qui détectent respectivement le rayonnement sous différents angles spatiaux,
- dans lequel la bande de matériau est déplacée dans le sens longitudinal relativement aux sources de rayonnement et aux détecteurs et une série de valeurs mesurées englobant sensiblement tous les points de mesure est respectivement relevée à des intervalles prédéfinis ;
- dans lequel, pour chaque point de mesure enregistré, la pente de la bande de matériau est calculée à partir des valeurs mesurées de paires respectives de détecteurs,

- dans lequel, pour des séries successives de valeurs mesurées, la vitesse relative dans le sens longitudinal étant connue, la longueur d'ondes et la phase des modifications des pentes sont calculées,

- dans lequel, à partir de la longueur d'ondes et de la phase, au moins un extrême et la série de valeurs mesurées extrêmes suivante en faisant respectivement partie sont calculés,

- dans lequel le contour transversal est calculé en totalisant les valeurs de pente de la série de valeurs mesurées extrêmes, l'amplitude du contour transversal étant définie, et

- dans lequel l'allongement de la bande est calculé à partir de la longueur d'ondes et de l'amplitude du contour.

2. Procédé selon la revendication 1, dans lequel les détecteurs mesurent l'intensité du rayonnement affaiblie par la bande de matériau.

3. Procédé selon la revendication 1 ou 2, dans lequel les points de mesure recouvrent sensiblement toute la largeur de la bande de matériau.

4. Procédé selon l'une quelconque des revendications 1 à 3, dans lequel les points de mesure sont regroupés en canaux de mesure d'au moins deux points de mesure respectivement.

5. Procédé selon la revendication 4, dans lequel les canaux de mesure comprennent respectivement sensiblement le même nombre de points de mesure.

6. Procédé selon la revendication 4 ou 5, dans lequel les valeurs des pentes sont déterminées pour chaque canal de mesure.

7. Procédé selon l'une quelconque des revendications 4 à 6, dans lequel un allongement de bande est calculé pour chaque canal de mesure.

8. Procédé selon l'une quelconque des revendications 1 à 7, dans lequel la longueur d'ondes et la phase de planéité est calculée à l'aide d'une transformation Fourier.

9. Procédé selon l'une quelconque des revendications 1 à 8, dans lequel le contour de la bande de matériau est calculé au niveau de l'extrême en partant des données de la série de valeurs mesurées extrêmes et d'au moins une autre série de valeurs mesurées.

10. Procédé selon l'une quelconque des revendications 1 à 9, dans lequel le calcul de l'allongement de la bande est réalisé à l'aide de la formule

$$\left(\frac{Amplitude \cdot \pi}{Wellenlänge}\right)^2 \cdot 10^5$$

en unités « unité I ».

11. Procédé selon l'une quelconque des revendications 1 à 10, dans lequel des valeurs mesurées sont relevées au début pour une première longueur de bande prédéfinie avant d'être exploitées.

12. Procédé selon la revendication 11, dans lequel, en fonction de la première longueur de bande prédéfinie, les valeurs mesurées sont relevées pour une deuxième longueur de bande plus petite prédéfinie avant que les valeurs mesurées relevées dernièrement sur une toute première longueur de bande ne soient respectivement exploitées.

13. Dispositif de définition de la planéité d'une.bande de matériau, la bande de matériau (2) définissant un sens longitudinal,

- comportant au moins deux sources de rayonnement (10, 12) qui sont disposées à distance l'une de l'autre transversalement au sens longitudinal,

- comportant une pluralité de détecteurs (14, 16) qui sont disposés à distance les uns des autres transversalement au sens longitudinal et à distance des sources de rayonnement (10, 12), le dispositif étant conçu de manière à ce qu'en cours de fonctionnement, la bande de matériau (2) soit disposée entre les sources de rayonnement (10, 12) et les détecteurs (14, 16) et

- comportant des moyens d'exploitation des valeurs mesurées relevées par les détecteurs (14, 16),

- au moins deux détecteurs (14, 16) respectivement étant orientés vers deux sources de rayonnement différentes (10, 12) et formant une paire de détecteurs et

- les axes formés respectivement par les détecteurs (14, 16) d'une paire et les sources de rayonnement (10, 12) se croisant sensiblement au niveau de la bande de matériau et définissant ainsi un point de mesure (22),

**caractérisé en ce que**

- les moyens d'exploitation sont conçus de manière à calculer, en cours de fonctionnement, la pente de la bande de matériau aux points de mesure (22) et, en partant de là, la planéité de la bande de matériau.

**14.** Procédé selon la revendication 13, **caractérisé en ce que** les sources de rayonnement (10, 12) émettent un rayonnement électromagnétique à haute énergie, notamment un rayonnement X ou un rayonnement gamma.

**15.** Procédé selon la revendication 13 ou 14, **caractérisé en ce que** les détecteurs (14, 16) sont conçus sous forme de chambres d'ionisation, de compteurs à scintillation, de tubes compteurs ou de détecteurs à semi-conducteurs.

**16.** Procédé selon l'une quelconque des revendications 13 à 15, **caractérisé en ce que** les détecteurs (14, 16) sont disposés répartis sur sensiblement l'ensemble de la largeur de la bande de matériau (2).

**17.** Procédé selon l'une quelconque des revendications 13 à 15, **caractérisé en ce qu'**il est prévu des moyens de déplacement pour déplacer les détecteurs (12, 14) transversalement au sens longitudinal de la bande de matériau (2).

**18.** Procédé selon l'une quelconque des revendications 13 à 15, **caractérisé en ce que** les détecteurs (14, 16) recouvrent partiellement la largeur de la bande de matériau (2) et qu'il est prévu des moyens de propulsion pour déplacer les sources de rayonnement (10, 12) et les détecteurs (14, 16), les moyens de propulsion provoquant, pendant une série de mesures, un déplacement sensiblement transversalement au sens longitudinal.

**19.** Procédé selon l'une quelconque des revendications 13 à 18, **caractérisé en ce que** les moyens d'exploitation sont conçus sous forme d'une pluralité de calculateurs, respectivement un calculateur ou un groupe de calculateurs calculant du moins partiellement les grandeurs d'exploitation respectives.

**20.** Utilisation d'un dispositif de mesure du profil d'épaisseur de bande d'une bande de matériau pour définir la planéité,

- le dispositif présentant

  - au moins deux sources de rayonnement,
  - une pluralité de détecteurs qui sont disposés à distance les uns des autres et des sources de rayonnement, la bande de matériau étant disposée entre les sources de rayonnement et les détecteurs et étant ensuite déplacée relativement à ceux-ci dans le sens longitudinal, et
  - des moyens d'exploitation des valeurs mesurées relevées par les détecteurs,

- les détecteurs produisant des valeurs mesurées aux points de mesure disposés dans la bande de matériau et

- les moyens d'exploitation calculant à partir des valeurs mesurées les pentes aux points de mesure et, partant de là, la planéité de la bande de matériau.

Fig.1

Fig.2

20' 18'

2

b a

a)

20' 18'

2

b' a'

b)

Fig.3

Fig.4

a)

b)

Fig.5

Fig.6